Europäisches Patentamt

European Patent Office

Office européen des brevets

(11) Veröffentlichungsnummer: **0 373 381 B1**

(12) **EUROPÄISCHE PATENTSCHRIFT**

(45) Veröffentlichungstag der Patentschrift: **28.07.93**

(21) Anmeldenummer: **89121174.0**

(22) Anmeldetag: **16.11.89**

(51) Int. Cl.⁵: **H02M 7/527**

(54) Verfahren zur Steuerung eines dreiphasigen Wechselrichters.

(30) Priorität: **14.12.88 CH 4617/88**

(43) Veröffentlichungstag der Anmeldung:
**20.06.90 Patentblatt 90/25**

(45) Bekanntmachung des Hinweises auf die
Patenterteilung:
**28.07.93 Patentblatt 93/30**

(84) Benannte Vertragsstaaten:
**BE CH DE FR GB IT LI**

(56) Entgegenhaltungen:
**GB-A- 1 108 571**

**BBC-NACHRICHTEN vol. 46, no. 12, Dezember 1964, Seiten 699 - 721; A. SCHÖNUNG ET AL: "Geregelter Drehstrom-Umkehrantrieb mit gesteuertem Umrichter nach dem Unterschwingungsverfahren"**

(73) Patentinhaber: **ASEA BROWN BOVERI AG**
**Haselstrasse**
**CH-5401 Baden(CH)**

(72) Erfinder: **Stemmler, Herbert, Dr.**
**Ahornweg 16**
**CH-5416 Kirchdorf(CH)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Technisches Gebiet

Bei der Erfindung wird ausgegangen von einem Verfahren zur Steuerung eines dreiphasigen Wechselrichters nach dem Oberbegriff des Patentanspruchs 1.

Stand der Technik

Mit dem Oberbegriff nimmt die Erfindung auf einen Stand der Technik Bezug, wie er aus der CH-A-420 365 bekannt ist. Dort werden in einer dreiphasigen Wechselrichterschaltung zur Speisung eines Stromrichtermotors, bei der aus Gleichspannungsanteilen verschiedener Polarität stark oberwellenhaltige, sinusförmige, der gewünschten Frequenz entsprechende Wechselspannungen erzeugt werden, zur Verringerung der Oberwelligkeit je Phase mehrere Wechselrichtergruppen über eine oder mehrere Drosselspulen wechselstromseitig parallelgeschaltet. Je eine Motorwicklung ist an die Mitte einer Drosselspule angeschlossen. Zur Steuerung des Wechselrichters wird eine dreieckförmige Spannung höherer Frequenz als die höchste Motorfrequenz mit einer sinusförmigen Spannung der gewünschten Motorfrequenz überlagert, wobei die dreieckförmige Spannung für die wechselstromseitig parallelgeschalteten Wechselrichtergruppen verschiedene Phasenlagen von 0° und 180°, ggf. noch von 90° und 270° haben. Die Wechselrichtergruppen jeder Phase können in Reihe geschaltet sein, wobei Drosselspulen mit je einer Wicklung für je zwei Stromrichtergruppen mit gemeinsamen Eisenkern vorgesehen sind. Wechselrichter verschiedener Phasen können über Drosselspulen miteinander gekoppelt sein. Je zwei Wechselrichtergruppen können mit je einer Primärwicklung von Transformatoren verbunden sein, deren Sekundärwicklungen in Reihe geschaltet und an eine Wechselrichtersammelschiene geführt sind.

Zum einschlägigen Stand der Technik wird ferner auf die CH-A-489 945 verwiesen, in der ein ähnliches Wechselrichtersteuerverfahren zur Speisung einer Asynchronmaschine veränderbarer Drehzahl angegeben ist.

Bei jedem Umschalten des Wechselrichters entstehen in den Stromrichterventilen sowie in deren Beschaltungsgliedern Ein- und Ausschaltverluste, welche als Wärme mittels Kühleinrichtungen von den Halbleiterventilen abgeführt werden müssen. Mit zunehmender Wechselrichterschaltfrequenz sinkt der Wirkungsgrad des Wechselrichters, wobei die thermische Beanspruchung der Halbleiterelemente steigt. Aus diesen Gründen ist es erwünscht, mit möglichst geringer relativer Schaltfrequenz auszukommen.

Eine Dreipunktschaltung ist aus der DE-A1 29 37 995 bekannt.

Aus der deutschen Zeitschrift etz Archiv, Bd. 10 (1988) H.7, S.215-220 ist es bekannt, dass die Thyristoren eines 3-Punkt-Wechselrichters gedanklich 2 Teilstromrichtern zuzuordnen sind, die jeweils als 2-Punkt-Wechselrichter betrieben werden.

Aus: Control in Power Electronics and Drives, IFAC SYMPOSIUM, Düsseldorf, October 7-9, 1974, Preprints Volume 1, S.457-472, ist es bekannt, dass beim 2-Puls-Steuerverfahren im unteren Drehzahlbereich die einseitig sinusförmige Pulslängenmodulation das günstigste Verhältnis von Oberschwingungen im Strom zur Taktfrequenz des Wechselrichters aufweist.

Darstellung der Erfindung

Die Erfindung, wie sie im Patentanspruch 1 definiert ist, löst die Aufgabe, die Ein- und Ausschaltverluste eines Wechselrichters zu reduzieren.

Ein Vorteil der Erfindung besteht darin, dass der Energieverbrauch beim Betrieb von Wechselrichtern verringert werden kann. Gegebene Halbleiterventile lassen sich leistungsmässig besser ausnutzen. Die Aufwendungen für die Kühlung der Halbleiterventile sind geringer. Bei gleicher herkömmlicher Kühleinrichtung kann der Wechselrichter mit höherfrequenten Ausgangsspannungen betrieben werden. Insbesondere im unteren Frequenz- bzw. Drehzahlbereich (0 % - 50 %) kann eine Reduktion der Umschaltungen des Wechselrichters auf 2/3 erreicht werden.

Kurze Beschreibung der Zeichnungen

Die Erfindung wird nachstehend anhand von Ausführungsbeispielen erläutert. Es zeigen:

Fig. 1     eine Steuerschaltung für einen zweipulsigen Wechselrichter zur Speisung einer dreiphasigen Asynchronmaschine, der aus 2 2-Punkt-Wechselrichtern zusammengesetzt ist,

Fig. 2     eine Logikschaltung der Steuerschaltung gemäss Fig. 1,

Fig. 3.1-3.14     Signaldiagramme zur Erläuterung der Wirkung der Steuerschaltung gemäss Fig. 1,

Fig. 4     einen zweipulsigen 2 x 2-Punkt-Wechselrichter mit gleichphasiger Drossel und

Fig. 5     einen zweipulsigen Drei-Punkt-Wechselrichter zur Speisung einer Asynchronmaschine.

Wege zur Ausführung der Erfindung

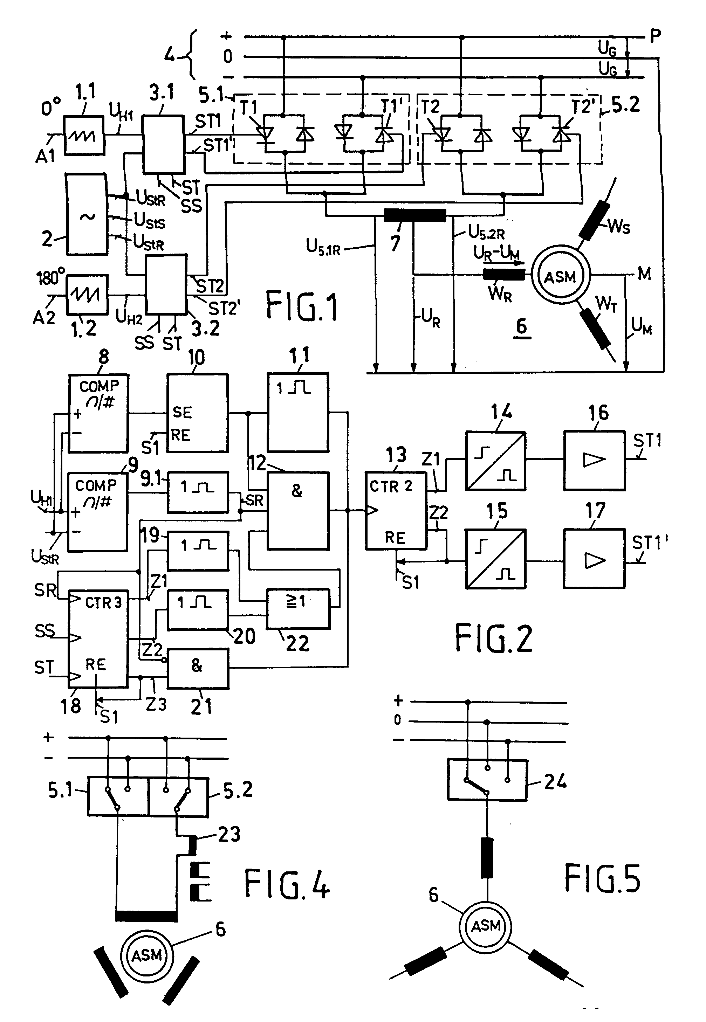

Bei der in Fig. 1 dargestellten Steuerschaltung sind zwei parallel angeordnete und gleich aufgebaute Wechselrichtergruppen 5.1 und 5.2 eines zur Phase R gehöhrenden Teil-Wechselrichters einer dreiphasigen Wechselrichteranordnung gleichspannungsseitig an einen Pluspol P und an einen Minuspol N einer Gleichstromquelle 4 mit Nulleiter O angeschlossen und wechselspannungsseitig über eine Drosselspule 7 zusammengeschaltet, die ähnlich wie eine Saugdrosselspule in Gleichrichteranordnung wirkt. Die Gleichstromquelle 4 mit einer Gleichspannung von $2 \cdot U_G$ kann ein Gleichstromnetz oder ein Gleichstromzwischenkreis eines Umrichters sein.

Die Mitte der Drosselspule 7 ist mit einer Statorwicklung $W_R$ einer dreiphasigen Asynchronmaschien 6 verbunden, an der bei Stromfluss eine Statorwicklungsspannung $U_R$-$U_M$ abfällt. R, S und T bezeichnen die drei Phasen der Asynchronmaschine 6, von der alle drei Statorwicklungen $W_R$, $W_S$, $W_T$ gezeichnet sind. $U_R$ bezeichnet eine resultierende Wechselrichterspannung gegenüber dem Nulleiter O bezüglich der Phase R und $U_M$ eine Sternpunktspannung eines Sternpunktes M der Statorwicklungen $W_R$, $W_S$ und $W_T$. Von der Wechselrichteranordnung ist nur der zur Phase R gehörende Teil-Wechselrichter genauer dargestellt. Die übrigen Statorwicklungen $W_S$ und $W_T$ sind entsprechend der Statorwicklung $W_R$ an die Gleichspannungsquelle 4 anzuschliessen. Die Wechselrichtergruppen 5.1 und 5.2 weisen anodenseitig an den Pluspol P angeschlossene Thyristoren T1 bzw. T2 und kathodenseitig an den Minuspol N angeschlossene Thyristoren T1' bzw. T2' auf, jeweils mit antiparallelen Dioden zu den Thyristoren. Wechselspannungsseitig sind die Thyristoren T1 und T1' bzw. T2 und T2' elektrisch verbunden und an entgegengesetzte Enden der Drosselspule 7 angeschlossen. $U_{5.1R}$ bzw. $U_{5.2R}$ bezeichnen die Ausgangsspannungen der Wechselrichtergruppen 5.1 bzw. 5.2 des Teil-Wechselrichters gegenüber dem Nulleiter O bezüglich der Phase R.

Die Steuerung der Wechselrichtergruppen 5.1 und 5.2 erfolgt über gleich aufgebaute Logikschaltungen 3.1 bzw. 3.2, von denen eine näher in Fig. 2 dargestellt ist. In den Logikschaltungen werden eine sinusförmige Steuerspannung $U_{StR}$, die von einem Steuersignalgeber 2 geliefert wird, mit einer dreieckförmigen Hilfswechselspannung $U_{H1}$ bzw. $U_{H2}$, die von Sägezahngeneratoren 1.1 bzw. 1.2 geliefert werden, verglichen. Der Steuersignalgeber 2 kann z.B. ein an sich bekannter Drehzahlregler mit unterlagertem Stromregler sein, der die Drehzahl für die Asynchronmaschine 6 vorgibt. $U_{StS}$ und $U_{StT}$ bezeichnen Steuerspannungen bezüglich der Phasen S und T, welche die gleiche Amplitude wie die Steuerspannung $U_{StR}$ für die Phase R, jedoch bezüglich dieser eine Phasenverschiebung um 120° el. bzw. 240° el. aufweisen. Die Frequenz dieser Steuerspannungen entspricht der gewünschten Frequenz der Asynchronmaschine 6. Die Hilfswechselspannungen $U_{H1}$ und $U_{H2}$ sind gleich in ihrer vorgebbaren Amplitude und Frequenz, jedoch gegenseitig um 180° el. in der Phase verschoben; ihre Frequenz ist höher als die höchste Frequenz der Asynchronmaschine 6.

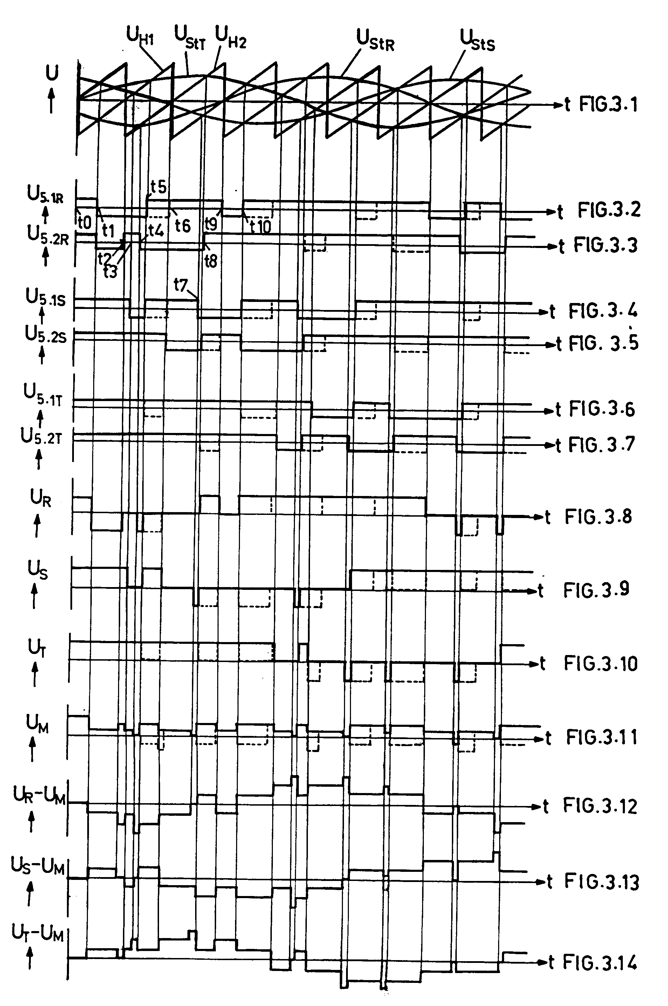

Den Sägezahngeneratoren 1.1 und 1.2 sind eingangsseitig ggf. unterschiedliche Sägezahnformsignale A1 bzw. A2 zugeführt, welche in Abhängigkeit vom Mittelwert des Stromes im Nulleiter O und/oder in Abhängigkeit vom Mittelwert der Sternpunktspannung $U_M$ die Form der Hilfswechselspannungen $U_{H1}$ und $U_{H2}$ bestimmen. Die Sägezahnformsignale A1 und/oder A2 können während des Betriebs geändert werden, um etwaige Potentialverschiebungen der Sternpunktspannung $U_M$ gegenüber dem Nulleiter O auszugleichen. Weisen die Sägezahnformsignale A1 und A2 ein vorgebbares 1. Potential auf, so haben die Hilfswechselspannungen $U_{H1}$ und $U_{H2}$ die in Fig. 3.1 dargestellte Form. Weisen A1 und A2 ein vorgebbares 2. Potential auf, so sind $U_{H1}$ und $U_{H2}$ invertiert mit steilen Anstiegs- und flachen Abstiegsflanken (nicht dargestellt).

Durch die 180°-Phasenverschiebung kann die Oberwelligkeit der an den Statorwicklungen $W_R$, $W_S$, $W_T$ der Asynchronmaschine 6 anliegenden rechteckförmigen Wechselspannung in bekannter Weise (Fig. 3 der CH-A-420 365) wesentlich herabgesetzt werden.

Bei der in Fig. 2 dargestellten Logikschaltung 3.1 gemäss Fig. 1 sind mit 8 und 9 Komparatoren bezeichnet, denen eingangsseitig, allerdings mit entgegengesetzter Polung, die sinusförmige Steuerspannung bzw. die erste Ueberlagerungsspannung $U_{StR}$ und die Hilfswechselspannung bzw. zweite Ueberlagerungsspannung $U_{H1}$ zugeführt sind. Der Komparator 8 ist ausgangsseitig mit dem Setzeingang SE eines SR-Kippgliedes 10 verbunden, das durch ein vorgebbares Rücksetzsignal S1 an den Rücksetzeingang RE ausgangsseitig auf logisch 0 zurückgesetzt werden kann. Ausgangsseitig ist das SR-Kippglied 10 über ein nicht nachtriggerbares Kippglied 11 mit einem Triggereingang eines Zählers 13 verbunden, der Zählausgänge Z1 und Z2 aufweist und ebenfalls durch das Rücksetzsignal S1 an den Rücksetzeingang RE auf 0 zurückgesetzt werden kann. Die Zählausgänge Z1 und Z2 weisen abwechselnd den 1-Zustand auf, wenn am Zähleingang ein 0-1-Uebergang auftritt. Ein 1-Zustand am Zählausgang Z2 setzt den Zähler 13 über den Rücksetzeingang RE auf 0 zurück.

Die Zählausgänge Z1 und Z2 sind über Zündimpulsgeneratoren 14 bzw. 15 mit Zündimpulsverstärkern 16 bzw. 17 verbunden, an denen ausgangsseitig die Zündsignale ST1 bzw. ST1' für die Thyristoren T1 bzw. T1' anliegen. Der Zündimpulsgenerator 14 erzeugt ca. 100 $\mu$s vor dem Zündsignal für den Thyristor T1 ein Löschsignal für den Thyristor T1', falls dieser leitend ist. Der Zündgenerator 15 erzeugt entsprechend ca. 100 $\mu$s vor dem Zündsignal für den Thyristor T1' ein Löschsignal für den Thyristor T1, falls dieser leitend ist. Die Löschsignale und Löschsignalschaltkreise sind aus Gründen der besseren Uebersichtlichkeit nicht dargestellt.

Der Komparator 9, an dessen negierendem Eingang die Steuerspannung $U_{StR}$ und an dessen nichtnegierendem Eingang die Hilfswechselspannung $U_{H1}$ anliegt, ist ausgangsseitig über ein monostabiles Kippglied 9.1, an dem ausgangsseitig ein Umschaltsignal SR bezüglich der Phase R anliegt, und über ein UND-Glied 12 mit dem Zähleingang des Zählers 13 verbunden. Für $U_{H1} \geq U_{StR}$ ist für eine vorgebbare Kippzeit das Umschaltsignal SR = 1, ansonsten = 0. Das Umschaltsignal SR sowie gleichartige Umschaltsignale SS und ST, die von Logikschaltungen geliefert werden, die zu den Phasen S und T gehören, sind Zähleingängen eines Zählers 18 mit drei Zählausgängen Z1 - Z3 und einem Rücksetzeingang RE zugeführt. Die Zählausgänge Z1, Z2, Z3 weisen nacheinander den 1-Zustand auf, wenn an den Zähleingängen 0-1-Uebergänge auftreten. Ein Rücksetzsignal S1 und/oder ein 1-Zustand am Zählausgang Z3 setzt den Zähler 18 über den Rücksetzeingang RE auf 0 zurück.

Die Zählausgänge Z1 und Z2 sind über nichtnachtriggerbare, monostabile Kippglieder 19 bzw. 20 und ein nachgeschaltetes ODER-Glied 22 mit einem Eingang des UND-Gliedes 12 verbunden. Ein weiterer Eingang des UND-Gliedes 12 ist mit dem Ausgang des SR Kippgliedes 10 verbunden. Der Zählausgang Z3 ist über ein UND-Glied 21 mit dem Zähleingang des Zählers 13 verbunden. Ein negierter Eingang des UND-Gliedes 21 ist an den Ausgang des Kippgliedes 9.1 angeschlossen. Die Kippzeit der Kippglieder 9.1, 11, 19 und 20 ist so kurzzeitig eingestellt, dass deren Ausgangssignal 0 ist, bevor ein Schnittpunkt der Hilfswechselspannung $U_{H1}$ mit einer Steuerspannung $U_{StS}$ oder $U_{StT}$ einer Nachbarphase S bzw. T erreicht sein kann.

Die Wirkung der in Fig. 1 und 2 dargestellten Schaltungen soll nun anhand der Fig. 3.1 - 3.14 erläutert werden. Fig. 3.1 zeigt um 180° el. phasenverschobene, sinusförmige Steuerspannungen $U_{StR}$, $U_{StS}$ und $U_{StT}$ zur Steuerung der Phasen R, S, T sowie relativ zueinander um 180° el. phasenverschobene Wechselspannungen $U_{H1}$ und $U_{H2}$ in Abhängigkeit von der Zeit t. Auf der Ordinate ist die Spannung U aufgetragen. Die Amplituden der Wechselspannungen $U_{H1}$ und $U_{H2}$ sind grösser als die untereinander gleichen Amplituden der Steuerspannungen $U_{StR}$, $U_{StS}$, $U_{StT}$.

In den Fig. 3.2 - 3.7 sind die rechteckförmigen Ausgangsspannungen $U_{5.1R}$, $U_{5.2R}$; $U_{5.1S}$, $U_{5.2S}$; $U_{5.1T}$, $U_{5.2T}$ der Wechselrichtergruppen 5.1 bzw. 5.2 gegenüber dem Nulleiter O bezüglich der Phasen R, S, T in Abhängigkeit von der Zeit t dargestellt. Gestrichelt sind Umschaltungen angedeutet, die sich bei üblicher Steuerung ohne die erfindungsgemässe Massnahme ergeben würden.

Am Anfang der Steuerung sind das SR-Kippglied 10 sowie die Zähler 13 und 18 durch das Rücksetzsignal S1 zurückgesetzt, so dass deren Ausgangssignale logisch 0 sind. In einem Zeitpunkt t0 schneidet die senkrecht abfallende Hilfsspannung $U_{H1}$ die Steuerspannungen $U_{StR}$, $U_{StS}$ und $U_{StT}$, so dass das Ausgangssignal der Komparatoren 8 der drei Phasen R, S, T vom 0- in den 1-Zustand wechselt. Dieser Wert wird im jeweiligen SR-Kippglied 10 gespeichert, dessen Ausgangssignal ebenfalls vom 0- in den 1-Zustand wechselt. Dieser Zustandswechsel bewirkt über das Kippglied 11 einen Zählimpuls im Zähler 13, dessen Signalausgang Z1 von 0 nach 1 wechselt. Dadurch wird im Zündimpulsgenerator 14 ein Zündimpuls erzeugt, der im Zündimpulsverstärker 16 verstärkt wird und den Thyristor T1 zündet. Damit liegt an der Drosselspule 7 und an der Statorwicklung $W_R$ Pluspotential $U_G$ an. Gleiches gilt für die Phasen S und T, vgl. die Ausgangsspannungen $U_{5.1S}$ und $U_{5.1T}$.

Im Zeitpunkt t1 schneidet die ansteigende Hilfswechselspannung $U_{H1}$ die Steuerspannung $U_{StR}$ mit der Wirkung, dass der zugehörige Wechelrichter 5.1 ausgangsseitig von + nach - umschaltet. Dies geschieht dadurch, dass das Ausgangssignal des Komparators 9 von 0 nach 1 wechselt. Infolge dieses 0-1 Wechsels wird während der Kippdauer des Kippgliedes 9.1 das Umschaltsignal SR und damit auch der Zählausgang Z1 des Zählers 18 logisch 1. Ueber das Kippglied 19 und das ODER-Glied 22 wird auch der zugehörige Eingang des UND-Gliedes 12, das über das SR-Kippglied 10 mit dem gespeicherten Wert 1 vorbereitet ist, logisch 1. Damit erhält der Zähler 13 ein Zählsignal, so dass anstelle von Z1 nunmehr Z2 den logischen Wert 1 annimmt. Damit erzeugt der Zündimpulsgenerator 15 einen Zündimpuls für den Thyristor T1', wobei gleichzeitig der Thyristor T1 gelöscht wird (Löscheinrichtung ist nicht dargestellt). An der Drosselspule 7 liegt nun das Potential $U_{5.1R} = -U_G$ an.

Im Zeitpunkt t3 schneidet die ansteigende Hilfswechselspannung $U_{H1}$ die Steuerspannung $U_{StS}$ mit der Wirkung, dass der zugehörige Wechselrichter 5.1 von + nach - umschaltet. Dies geschieht dadurch, dass in der zur Phase S gehörenden Logikschaltung 3.1 das Umschaltsignal SS = 1 und die Ausgangsspannung $U_{5.1S}$ = $-U_G$ wird. Auch in der zur Phase R gehörenden Logikschaltung 3.1 erhält der Zähler 18 einen Zählimpuls, so dass an Stelle von Z1 nunmehr Z2 = 1 wird. Dieses 1-Signal kann aber das UND-Glied 12 nicht passieren, da SR = 0 ist.

Im Zeitpunkt t5 schneidet die ansteigende Hilfswechselspannung $U_{H1}$ die Steuerspannung $U_{StT}$ mit der Wirkung, dass nun nicht der Wechselrichter 5.1 der Phase T von + nach - umschaltet (wie das in der bekannten Anordnung der Fall wäre), sondern seine beiden Nachbar-Wechselrichter 5.1 und 5.2 der Phasen R und S schalten je von - nach +. Dies geschieht dadurch, dass in allen drei Logikschaltungen 3.1, die zu den Phasen R, S, T gehören, der Zähler 18 einen Zählimpuls erhält, so dass anstelle von Z1 bzw. Z2 nunmehr Z3 = 1 wird. Das Ausgangssignal des ODER-Gliedes 22 ist damit = 0 und das UND-Glied 12 gesperrt. In der zur Phase T gehörenden Logikschaltung 3.1 ist wegen ST = 1 das UND-Glied 21 gesperrt, bei den anderen beiden Phasen R und S wegen SR = 0 und SS = 0 dagegen vorbereitet. Bei diesen beiden Phasen gelangt über das UND-Glied 21 ein Zählimpuls an den Zähler 13, so dass dieser, nach vorheriger Rückschaltung, auf Z1 = 1 umschaltet. Damit wird $U_{5.1R}$ = $U_G$ und $U_{5.1S}$ = $U_G$.

Im Zeitpunkt t6 fällt die Spannung von $U_{H1}$ wieder ab, wie im Zeitpunkt t0. Die Schnittpunkte mit den Steuerspannungen $U_{StR}$, $U_{StS}$, $U_{StT}$ üben aber keinerlei Wirkung aus, d.h. keiner der 3 Wechselrichter 5.1 der Phasen R, S, T schaltet, da der Ausgangszustand des einmal gesetzten SR-Kippgliedes 10 unverändert bleibt.

Jetzt wiederholt sich die angegebene Schaltfolge. In den Zeitpunkten t7, t9 und t10 schneidet die ansteigende Hilfswechselspannung $U_{H1}$ nacheinander die Steuerspannungen $U_{StS}$, $U_{StR}$, $U_{StT}$, wobei eine Ventilumsteuerung bei den Phasen S und R, nicht aber bei T erfolgt. Anstelle einer Umschaltung bei T werden die Umschaltungen bei den Phasen S und R bewirkt, wie oben erläutert in Verbindung mit den Umschaltzeitpunkten t1, t3 und t5.

Bezüglich der Wechselrichtergruppen 5.2 der drei Phasen R, S, T gilt das gleiche wie für die Wechselrichtergruppen 5.1, nur dass die 1. Ueberlagerungsspannungen $U_{StR}$, $U_{StS}$, $U_{StT}$ mit der 2. Ueberlagerungs- bzw. Hilfswechselspannung $U_{H2}$ überlagert werden. Im Zeitpunkt t0 ist lediglich $U_{StS}$ > $U_{H2}$, so dass über die Bauelemente 8, 10, 11 der Zähler 13 der Logikschaltung 3.2 der Phase S einen Zählimpuls erhält. Dadurch wird dort Z1 = 1, und der zugehörige Thyristor T1 erhält über die Bauelemente 14 und 16 einen Zündimpuls mit der Wirkung, dass $U_{5.2S}$ Pluspotential aufweist, vgl. Fig. 3.5. Bei den Phasen R und S erfolgt die 1. Thyristorzündung im Zeitpunkt t2, wenn $U_{StR}$ und $U_{StT}$ > $U_{H2}$ werden. Vorher blockiert der 0-Ausgang des jeweiligen SR-Kippgliedes 10 das UND-Glied 12. Dabei werden im Zeitpunkt t2 auch die Ausgangsspannungen $U_{5.2R}$ und $U_{5.2T}$ der Wechselrichtergruppen 5.2 auf dasselbe positive Potential $U_G$ gelegt, vgl. die Fig. 3.3 und Fig. 3.7.

In den Fig. 3.8 - 3.10 sind die resultierenden Wechselrichterausgangsspannungen gegenüber dem Nulleiter O, nämlich $U_R$, $U_S$ und $U_T$ in Abhängigkeit von der Zeit t dargestellt. Es gilt : $U_R$ = $U_{5.1R}$ + $U_{5.2R}$, $U_S$ = $U_{5.1S}$ + $U_{5.2S}$ und $U_T$ = $U_{5.1T}$ + $U_{5.2T}$.

Fig. 3.11 zeigt die Sternpunktspannung $U_M$ = $U_R$ + $U_S$ + $U_T$ des gemeinsamen Sternpunktes M der Statorwicklungen $W_R$, $W_S$, $W_T$ gegenüber dem Mittelleiter O der Gleichstromquelle 4 in Abhängigkeit von der Zeit t.

In den Fig. 3.12 - 3.14 sind Wicklungsspannungen $U_R$ - $U_M$ bzw. $U_S$ - $U_M$ bzw. $U_T$ - $U_M$ in Abhängigkeit von der Zeit t dargestellt. Dieselben Spannunungsverhältnisse, die erfindungsgemäss mit 10 Umschaltungen bewirkt werden, hätten bei dem herkömmlichen Steuerverfahren 16 Umschaltungen erfordert.

Die Fig. 4 und 5 zeigen zwei verschiedene Wechselrichterschaltungen, bei denen man die 2-Puls-Steuerung implementieren kann. Bei der in Fig. 4 dargestellten 2 x 2-Punktschaltung mit gleichphasiger Drosselspule 23 gibt es keine Probleme mit der Schaltfolge-Totzeit des Wechselrichters. Die 3-Punkt-Schaltung gemäss Fig. 5 hat den Vorteil, dass sie ohne Drosselspule auskommt. Bei den Fig. 4 und 5 sind die Wechselrichter vereinfacht als Schalter dargestellt.

Das erfindungsgemässe Verfahren lässt sich auch bei einem einpulsigen 2-Punkt-Wechselrichter anwenden, wie er sich aus der Schaltung gemäss Fig. 1 ohne Signalgenerator 1.2, Logikschaltung 3.2, Wechselrichtergruppe 5.2 und Drosselspule 7 ergeben würde, wobei die Statorwicklung $W_R$ direkt an den Ausgang der Wechselrichtergruppe 5.1 angeschlossen wäre.

Der Erfindung liegt die Erkenntnis zugrunde, dass 3 synchrone Umschaltungen von + nach - oder von - nach + keine Wirkung auf die Wicklungsspannung haben und dass ein Schalten in einer Nachbarphase, z.B. S oder T, die halbe negative Wirkung auf die Wicklungsspannung wie in einer betrachteten Phase, z.B. R, hat. Anstatt die Phase R von Pluspotential nach Minuspotential zu schalten, kann man die beiden Nachbarphasen S und T von Minuspotential nach Pluspotential schalten. Durch Anwendung dieser Prinzipien lassen sich unnötige Umschaltungen vermeiden. Dies gilt zumindest dann, wenn die Lastimpedanzen in den drei Phasen gleich sind. Die Last kann auch ein Transformator oder ein Drehstromnetz sein.

Die Umschaltzeitpunkte und die Folge der Phasen sind so gewählt, dass eine dreiphasige, möglichst sinusähnliche Motorwicklungsspannung bzw. Lastphasenspannung zustande kommt. Dabei sind die Umschaltzeitpunkte des einen Pulses so gegen die des anderen versetzt, dass bei der Addition der Spannungen beider Pulse sich nochmals möglichst viele Oberschwingungen gegeneinander aufheben. Eine weitere Verringerung der Oberschwingungen lässt sich z.B. erreichen, wenn vier verschieden gesteuerte Wechselrichtergruppen je Phase zusammengeschaltet werden, wobei die Phasenverschiebung der Hilfswechselspannung jeweils 90° beträgt. Wegen Schaltungen zur Verringerung von Oberschwingungen wird auf die eingangs genannte CH-A-420 365 verwiesen.

Bei relativ hoher Taktfrequenz der Hilfswechselspannungen $U_{H1}$ und $U_{H2}$ kann das erfindungsgemässe Verfahren im gesamten Drehzahlbereich der Asynchronmaschine 6 verwendet werden. Vorzugsweise wird dieses Verfahren jedoch nur im Drehzahlbereich von 0 % bis 30 % oder bis 70 % verwendet, während bei höheren Drehzahlen mit phasenverschobener 2-Puls-Grundfrequenztaktung gearbeitet wird, um gleichzeitig Oberschwingungen und Umschaltungen möglichst gering zu halten.

Es versteht sich, dass als Ventile anstelle der Thyristoren T1, T1', T2, T2' mit nicht dargestellten Umschwingkreisen auch abschaltbare GTO-Thyristoren oder Transistoren verwendet werden können. Anstelle der Logikschaltungen 3.1 und 3.2 kann ein Rechner vorgesehen sein, der die gewünschten Umschaltpunkte für die Ventile berechnet und entsprechende Steuersignale ausgibt. Die Hilfswechselspannungen können synchron oder asynchron zu den Steuerspannungen sein und sägezahnförmige oder trapezförmige oder sinusförmige oder sinusähnliche Gestalt aufweisen. Bei einem Aendern der Gestalt der Hilfswechselspannungen $U_{H1}$, $U_{H2}$ wird auch die Schnittpunktcharakteristik geändert, d.h., es erfolgt eine Umsteuerung der Ventile z.B. in Abhängigkeit von der absteigenden Flanke von $U_{H1}$ bzw. $U_{H2}$.

Statt anfangs alle Ventilausgänge auf positives Potential zu schalten, können die Ausgänge auch auf negatives Potential geschaltet werden. Wichtig ist, dass das Umschalten der Ventile (ausser bei einer Aenderung der Sägezahnformsignale A1 und A2) immer in gleicher Abhängigkeit erfolgt, d.h. stets in Abhängigkeit von einem spannunsmässig ansteigenden oder von einem spannungsmässig absteigenden Teil der Hilfsspannung. Hat man sich z.B. für die spannungsmässig ansteigende Flanke einer sägezahnförmigen Hilfsspannung entschieden, so erfolgt bei der absteigenden Flanke kein Umschalten mehr. Insgesamt reduziert sich somit die Zahl der Wechselrichterschaltungen um 1/3 - und dies ohne Auswirkungen auf den zeitlichen Verlauf der Motorwicklungsspannungen. Statt 6 Umschaltungen pro Periode der Hilfssteuerspannung gibt es nur noch 4.

**Patentansprüche**

1. Verfahren zur Steuerung eines dreiphasigen Wechselrichters,
   a) mit mindestems einem Teilwechselrichter (5.1, 5,2, 24) je Wechselstromphase (R, S, T) des Wechselrichters,
   b) bei dem Ventile (T1, T1'; T2, T2') der Teilwechselrichter in Abhängigkeit von Schnittpunkten zweier Ueberlagerungs-Wechselspannungssignale ($U_{StR}$, $U_{StS}$, $U_{StT}$; $U_{H1}$, $U_{H2}$) gesteuert werden,
   c) wovon ein sinusförmiges erstes Ueberlagerungs-Wechselspannungssignal ($U_{StR}$, $U_{StS}$, $U_{StT}$) die gewünschte Frequenz und Phasenlage der Ausgangsspannung des jeweiligen Teilwechselrichters (5.1, 5,2; 24) besitzt und
   d) ein zweites Ueberlagerungs-Wechselspannungssignal mindestens ein erstes Hilfswechselspannungssignal ($U_{H1}$, $U_{H2}$) veränderbarer Frequenz und der Amplitude ist,
   dadurch gekennzeichnet,
   e) dass nur bei zwei zeitlich aufeinander folgenden ersten und zweiten Schnittpunkten der Ueberlagerungs-Wechselspannungssignale die Ventile derjenigen Teilwechselrichter zweier erster und zweiter Wechselstromphasen umgesteuert werden, deren erstes Ueberlagerungs-Wechselspannungssignal geschnitten wurde und
   f) dass bei einem zeitlich darauffolgenden dritten Schnittpunkt nicht derjenige Wechselrichter einer dritten Wechselstromphase umgesteuert wird, dessen erstes Ueberlagerungswechselspannungssignal geschnitten wurde, sondern die Ventile der beiden Teilwechselrichter, die zu den beiden anderen Wechselstromphasen (R, S, T) gehören.

2. Verfahren nach Anspruch 1, dadurch gekennzeichnet,
   a) dass als Schnittpunkte der Ueberlagerungs-Wechselspannungssignale Schnittpunkte mit gleichartiger Schnittpunktcharakteristik ausgewählt werden, bei denen das schneidende Hilfswechselspannungssignal ($U_{H1}$, $U_{H2}$) stets einen positiven oder stets einen negativen Spannungsgradienten aufweist,
   b) insbesondere, dass es stets einen positiven Spannungsgradienten aufweist.

3. Verfahren nach Anspruch 1 oder 2, dadurch gekennzeichnet, dass die Hilfswechselspannungssignale ($U_{H1}$, $U_{H2}$) für alle drei Wechselstromphasen (R, S, T) des Wechselrichters (5.1, 5.2; 24) gleiche Amplitude und gleiche Phasenlage aufweisen.

4. Verfahren nach einem der Ansprüche 1 bis 3, dadurch gekennzeichnet,
   a) dass das Hilfswechselspannungssignal ($U_{H1}$, $U_{H2}$) dreieckförmig ist,
   b) insbesondere, dass es eine wenigstens annähernd senkrechte Flanke aufweist.

5. Verfahren nach einem der Ansprüche 1 bis 4, dadurch gekennzeichnet, dass die Frequenz des Hilfswechselspannungssignals ($U_{H1}$, $U_{H2}$) grösser ist als die höchste Frequenz der Ausgangsspannungen ($U_{5.1R}$, $U_{5.2R}$) der Teilwechselrichter (5.1, 5.2; 24).

6. Verfahren nach einem der Ansprüche 1 bis 5, dadurch gekennzeichnet, dass zur Initialisierung der Steuerung alle Ausgangsspannungen ($U_{5.1R}$ ... $U_{5.2T}$) der Teilwechselrichter jeder Wechselstromphase auf gleiches Spannungspotential gesteuert werden.

7. Verfahren nach Anspruch 6, dadurch gekennzeichnet,
   a) dass zumindest zu Beginn der Steuerung für alle Wechselstromphasen (R, S, T) in Abhängigkeit von Schnittpunkten des ersten Ueberlagerungs-Wechselspannungssignals ($U_{StR}$, $U_{StS}$, $U_{StT}$) mit der mindestens einen ersten Hilfswechselspannung ($U_{H1}$, $U_{H2}$), jedoch in Abhängigkeit von einer von der ersten verschiedenen zweiten Schnittpunktcharakteristik dieses ersten Hilfswechselspannungssignals, die Wechselrichterventile (T1, T1'; T2, T2') so gesteuert werden, dass am Wechselspannungsausgang ($U_{5.1R}$, $U_{5.2R}$) des Wechselrichters (5.1, 5.2) ein vorgebbares erstes Potential ( + ) anliegt, und
   b) dass mit Umschaltungen der Wechselrichterventile erst dann begonnen wird, wenn an allen Wechselstromphasen dieses erste Potential anliegt.

8. Verfahren nach einem der Ansprüche 1 bis 7, mit einer aus zwei Teil-Wechselrichtern (5.1, 5.2) je Wechselrichterstromphase (R, S, T) zusammengesetzte Stromrichteranordnung zur Erzeugung einer einphasigen Wechselspannung ($U_R$), dadurch gekennzeichnet, dass als Hilfswechselspannungssignale ($U_{H1}$, $U_{H2}$) der beiden Teil-Wechselrichter Wechselspannungssignale verwendet werden, die zueinander um 180° el. phasenverschoben sind, wobei sich der Winkel 360° el. auf die Periodendauer dieser Wechselspannungssignale bezieht und die der Ausgangsspannung der Teil-Wechselrichter entsprechenden ersten Ueberlagerungsspannungssignale ($U_{StR}$, $U_{StS}$, $U_{StT}$) gleiche Phasen besitzen.

9. Verfahren nach einem der Ansprüche 1 bis 8, dadurch gekennzeichnet, dass mindestens eines der Ueberlagerungs-Wechselspannungssignale ($U_{StR}$, $U_{StS}$, $U_{StT}$; $U_{H1}$, $U_{H2}$) und die Schnittpunkte dieser Ueberlagerungs-Wechselspannungssignale als zeitabhängige Grössen eines Zeitgebers eines Rechners gebildet werden.

10. Verfahren nach einem der Ansprüche 1 bis 9, dadurch gekennzeichnet, dass die Hilfswechselspannungssignale ($U_{H1}$, $U_{H2}$) während des Betriebs des Wechselrichters in ihrer Gestalt umschaltbar sind (A1, A2).

**Claims**

1. Method for controlling a three-phase inverter,
   a) having at least one inverter section (5.1, 5.2, 24) per alternating-current phase (R, S, T) of the inverter,
   b) in which valves (T1, T1'; T2, T2') of the inverter section are controlled in dependence on intersections of two superimposition alternating-voltage signals ($U_{StR}$, $U_{StS}$, $U_{StT}$; $U_{H1}$, $U_{H2}$),
   c) of which a sinusoidal first superimposition alternating-voltage signal ($U_{StR}$, $U_{StS}$, $U_{StT}$) has the required frequency and phase angle of the output voltage of the respective inverter section (5.1, 5.2; 24), and
   d) a second superimposition alternating-voltage signal is at least a first variable-frequency and -amplitude auxiliary alternating-voltage signal ($U_{H1}$, $U_{H2}$), characterised in that
   e) the valves of the inverter sections of two first and second inverter phases, the first superimposition alternating-voltage signal of which has been intersected, are switched only in the case of two first and second intersections of the superimposition alternating-voltage signals which follow one another in time, and
   f) at a third intersection which follows in time, it is not the inverter of a third alternating-current phase, the first superimposition alternating-voltage signal of which has been intersected which is switched but the valves of the two inverter sections which belong to the two other alternating-current phases (R, S, T).

**2.** Method according to Claim 1, characterised in that

a) intersections with the same type of intersection characteristic, in which the intersecting auxiliary alternating-voltage signal ($U_{H1}$, $U_{H2}$) always exhibits a positive or always exhibits a negative voltage gradient are selected as intersections of the superimposition alternating-voltage signals,

b) in particular, it always exhibits a positive voltage gradient.

**3.** Method according to Claim 1 or 2, characterised in that the auxiliary alternating-voltage signals ($U_{H1}$, $U_{H2}$) for all three alternating-current phases (R, S, T) of the inverter (5.1, 5.2; 24) exhibit the same amplitude and the same phase angle.

**4.** Method according to one of Claims 1 to 3, characterised in that

a) the auxiliary alternating-voltage signal ($U_{H1}$, $U_{H2}$) is triangular,

b) in particular, it exhibits one at least approximately vertical edge.

**5.** Method according to one of Claims 1 to 4, characterised in that the frequency of the auxiliary alternating-voltage signal ($U_{H1}$, $U_{H2}$) is higher than the highest frequency of the output voltages ($U_{5.1R}$, $U_{5.2R}$) of the inverter section (5.1, 5.2; 24).

**6.** Method according to one of Claims 1 to 5, characterised in that all output voltages ($U_{5.1R}$ ... $U_{5.2T}$) of the inverter section of each alternating-current phase are controlled for the same voltage potential for initialising the control system.

**7.** Method according to Claim 6, characterised in that

a) at least at the beginning of the control process, the inverter valves (T1, T1'; T2, T2') are controlled for all alternating-current phases (R, S, T) in dependence on intersections of the first superimposition alternating-voltage signal ($U_{StR}$, $U_{StS}$, $U_{StT}$) with the at least one first auxiliary alternating voltage ($U_{H1}$, $U_{H2}$), but in dependence on a second intersection characteristic, which is different from the first one, of this first auxiliary alternating-voltage signal, in such a manner that a predeterminable first potential (+) is present at the alternating voltage output ($U_{5.1R}$, $U_{5.2R}$) of the inverter (5.1, 5.2), and

b) switching-over of the inverter valves is begun only when this first potential is present at all alternating-current phases.

**8.** Method according to one of Claims 1 to 7, having a converter arrangement, composed of two inverter sections (5.1, 5.2) per inverter current phase (R, S, T), for generating a single-phase alternating voltage ($U_R$), characterised in that alternating voltage signals which are phase-shifted by 180° electrical with respect to one another are used as auxiliary alternating-voltage signals ($U_{H1}$, $U_{H2}$) of the two inverter sections, the angle of 360° electrical referring to the duration of a period of these alternating-voltage signals and the first superimposition voltage signals ($U_{StR}$, $U_{StS}$, $U_{StT}$) corresponding to the output voltage of the inverter section having the same phases.

**9.** Method according to one of Claims 1 to 8, characterised in that at least one of the superimposition alternating-voltage signals ($U_{StR}$, $U_{StS}$, $U_{StT}$; $U_{H1}$, $U_{H2}$) and the intersections of these superimposition alternating-voltage signals are formed as time-dependent quantities of a timer of a computer.

**10.** Method according to one of claims 1 to 9, characterised in that the shape of the auxiliary alternating-voltage signals ($U_{H1}$, $U_{H2}$) can be switched during the operation of the inverter (A1, A2).

**Revendications**

**1.** Procédé de commande d'un onduleur triphasé,

a) comportant au moins un onduleur partiel (5.1, 5.2, 24) pour chaque phase de courant alternatif (R, S, T) de l'onduleur,

b) dans lequel des valves (T1, T1'; T2, T2') des onduleurs partiels sont commandées en fonction de points d'intersection de deux signaux de tensions alternatives de superposition ($U_{StR}$, $U_{StS}$, $U_{StT}$; $U_{H1}$, $U_{H2}$),

c) dont un premier signal sinusoïdal de tensions alternatives de superposition ($U_{StR}$, $U_{StS}$, $U_{StT}$) possède la fréquence et la relation des phases voulues de la tension de sortie de l'onduleur partiel (5.1, 5.2; 24) en question, et

d) un second signal de tensions alternatives de superposition est au moins un premier signal de tensions alternatives auxiliaires ($U_{H1}$, $U_{H2}$) de fréquence et d'amplitude variables,

caractérisé en ce que :

e) ce n'est que lorsqu'un premier et un deuxième point d'intersection des signaux de tensions alternatives de superposition se suivent dans le temps que sont inversées les valves de ceux des onduleurs partiels de deux premières et secondes phases de courant alternatif, dont le premier signal de tensions alternatives de superposition a été intersecté, et en ce que :

f) lorsqu'un troisième point d'intersection succède aux deux premiers, ce n'est pas l'onduleur d'une troisième phase de courant alternatif, dont le premier signal de tensions alternatives de superposition a été intersecté, qui est inversé, mais bien les valves des deux onduleurs partiels qui appartiennent aux deux autres phases (R, S, T) de courant alternatif.

2. Procédé selon la revendication 1, caractérisé en ce que :

a) on sélectionne comme points d'intersection des signaux de tensions alternatives de superposition, des points d'intersection possédant des caractéristiques de points d'intersection semblables, pour lesquels le signal de tensions alternatives auxiliaires ($U_{H1}$, $U_{H2}$) d'intersection présente toujours un gradient de tension positif ou toujours un gradient de tension négatif,

b) en particulier en ce que ce signal présente toujours un gradient positif de tension.

3. Procédé selon la revendication 1 ou 2, caractérisé en ce que les signaux de tensions alternatives auxiliaires ($U_{H1}$, $U_{H2}$) présentent, pour les trois phases de courant alternatif (R, S, T) de l'onduleur (5.1, 5.2; 24), une même amplitude et une même relation de phases.

4. Procédé selon l'une des revendications 1 à 3, caractérisé en ce que :

a) le signal de tensions alternatives auxiliaires ($U_{H1}$, $U_{H2}$) est de forme triangulaire,

b) et en particulier qu'il présente un flanc au moins approximativement vertical.

5. Procédé selon l'une des revendications 1 à 4, caractérisé en ce que la fréquence du signal de tensions alternatives auxiliaires ($U_{H1}$, $U_{H2}$) est supérieure à la fréquence la plus élevée des tensions de sortie ($U_{5.1R}$, $U_{5.2R}$) de l'onduleur partiel (5.1, 5.2; 24).

6. Procédé selon l'une des revendications 1 à 5, caractérisé en ce que pour l'initialisation de la commande, toutes les tensions de sortie ($U_{5.1R}$, ..., $U_{5.2T}$) des onduleurs partiels de chaque phase de courant alternatif sont commandées au même potentiel de tension.

7. Procédé selon la revendication 6, caractérisé en ce que :

a) au moins au début de la commande de toutes les phases de courant alternatif (R, S, T), les valves d'onduleur (T1, T1', T2, T2') sont commandées en fonction des points d'intersection du premier signal de tensions alternatives de superposition ($U_{StR}$, $U_{StS}$, $U_{StT}$) avec au moins une première tension alternative auxiliaire ($U_{H1}$, $U_{H2}$), mais également en fonction d'une des deux premières caractéristiques différentes de point d'intersection de ce premier signal de tensions alternatives auxiliaires, de telle sorte qu'à la sortie de tensions alternatives ($U_{5.1R}$,$U_{5.2R}$) de l'onduleur (5.1, 5.2) soit présent un premier potentiel (+) prédéterminable, et

b) en ce que l'on n'entame des commutations des valves d'onduleur qu'après que ce premier potentiel soit présent sur toutes les phases du courant alternatif.

8. Procédé selon l'une des revendications 1 à 7, avec un montage redresseur constitué, pour chaque phase de courant d'onduleur (R, S, T), de l'assemblage de deux onduleurs partiels (5.1, 5.2), et destiné à créer une tension alternative monophasée ($U_R$), caractérisé en ce que l'on utilise comme signaux de tensions alternatives auxiliaires ($U_{H1}$, $U_{H2}$) des deux onduleurs partiels des signaux de tensions alternatives déphasés de 180° l'un par rapport à l'autre, d'où il découle que l'angle parcouru sur une période de ces signaux de tensions alternatives vaut 360° et que les premiers signaux de tensions de superposition ($U_{StR}$, $U_{StS}$, $U_{StT}$) correspondant à la tension de sortie de l'onduleur partiel possèdent la même phase.

9. Procédé selon l'une des revendications 1 à 8, caractérisé en ce qu'au moins un des signaux de tensions alternatives de superposition ($U_{StR}$, $U_{StS}$, $U_{StT}$; $U_{H1}$, $U_{H2}$) et les points d'intersection de ces signaux de tensions alternatives de superposition constituent des grandeurs variables dans le temps d'une horloge d'un ordinateur.

10. Procédé selon l'une des revendications 1 à 9, caractérisé en ce que les signaux de tensions alternatives auxiliaires ($U_{H1}$, $U_{H2}$) peuvent être inversées quant à leur forme (A1, A2), pendant le fonctionnement de l'onduleur.

FIG.1

FIG.2

FIG.4

FIG.5

FIG.3.1
FIG.3.2
FIG.3.3
FIG.3.4
FIG.3.5
FIG.3.6
FIG.3.7
FIG.3.8
FIG.3.9
FIG.3.10
FIG.3.11
FIG.3.12
FIG.3.13
FIG.3.14